# EUROPÄISCHE PATENTSCHRIFT

(11) **EP 2 595 842 B1**
(45) Veröffentlichungstag und Bekanntmachung des Hinweises auf die Patenterteilung: **05.11.2014**
(21) Anmeldenummer: 11735406.8
(22) Anmeldetag: 06.07.2011
(51) Int. Cl.: B60R 19/34, F16F 7/12

(54) **FAHRZEUG MIT CRASHSTRUKTUR MIT EINSTELLBARER STEIFIGKEIT FÜR EIN DEFORMATIONSELEMENT FÜR DAS FAHRZEUG**
VEHICLE WITH CRASH STRUCTURE HAVING ADJUSTABLE RIGIDITY FOR A DEFORMATION ELEMENT FOR THE VEHICLE
VEHICULE AVEC STRUCTURE D'ABSORPTION DE CHOC À RIGIDITÉ AJUSTABLE POUR UN ÉLÉMENT DE DÉFORMATION DU VÉHICULE

(30) Priorität: 21.07.2010 DE 102010031591
(43) Veröffentlichungstag der Anmeldung: 29.05.2013
(73) Patentinhaber: Robert Bosch GmbH, 70442 Stuttgart (DE)
(72) Erfinder: FRIEDRICH, Thomas, 71691 Freiberg A. N. (DE); GOETZELMANN, Bernd, 71277 Rutesheim (DE)
(86) Internationale Anmeldenummer: PCT/EP2011/061359
(87) Internationale Veröffentlichungsnummer: WO 2012/010417

(56) Entgegenhaltungen:
- EP-A2- 2 014 517
- DE-C1- 19 860 249
- US-A- 3 893 726

## Beschreibung

### Stand der Technik

Die Erfindung betrifft ein Fahrzeug mit einer Crashstruktur mit einstellbarer Steifigkeit für ein Deformationselement nach der Gattung des unabhängigen Patentanspruchs.

Aus der US 3 893 726 A ist ein solcher Fahrzeug bekannt, wobei die Crashstruktur eine stufenlos einstellbare Steifigkeit aufweist, indem sich wenigstens ein Sperrelement in einer zur Fahrzeugslängsrichtung senkrechten Richtung in Bezug zu einem Profil bewegt, so dass durch eine durch die Bewegung erreichte Position des wenigstens einen Sperrelement die Steifigkeit eingestellt wird.

Aus EP 1 792 786 A2 ist eine Crashbox bekannt, die ein gehäuseartiges Deformationsprofil mit einer längsträgerseitigen Flanschplatte aufweist und als Faltkonstruktion aus Metallblech ausgebildet ist. Das Deformationsprofil besteht aus zwei Schalenbauteilen, wobei an jedem Schalenbauteil ein Flanschplattenabschnitt angeformt ist. Die Schalenbauteile werden aus Ausgangsplatinen aus Metallblech gefaltet, anschließend zusammengesetzt und mittels Widerstandsschweißpunkten aneinander gefügt. Dies stellt eine herkömmliche Crashbox dar ohne jede Adaption auf einen Crashvorgang.

Eine solche Adaption ist jedoch beispielsweise aus DE 197 45 656 A1 bekannt. Dabei wird ein Pralldämpfer für ein Kraftfahrzeug vorgeschlagen, wobei in Abhängigkeit von einem Precrash-Signal, das ist ein Signal einer Rundumsichtsensorik wie an einer Radarsensorik oder einem Aufprallsignal eine Deformation gesteuert werden kann. Vorgeschlagen wird, dass an einem Deförmationselement Schieber sich senkrecht zur Kraftrichtung bewegen und Deformationselemente dadurch sperren, so dass durch die Kraftwirkung diese Deformationselemente durch plastische Verformung aufgrund der Sperrung Crashenergie abbauen. Durch eine parallele Anordnung oder durch einen Ineinanderbau von solchen Deformationselementen ist eine Adaption auf den Crashvorgang möglich. Als weiteres Beispiel wird vorgeschlagen, ein Deformationselement durch eine Verjüngung zum Abbau von Crashenergie zu benutzen. Dabei ist ein Element zur Verjüngung fixiert und ein weiteres kann durch einen Schieber frei gegeben werden, um die Verjüngung zu reduzieren. Die Bewegung des Schiebers erfolgt dabei radial, d.h. senkrecht zur Kraftrichtung und damit zur Längsachse des Deformationselements, üblicherweise ein Zylinder mit einer vorgegebenen Wanddicke.

### Offenbarung der Erfindung

Erfindungsgemäß hat das Fahrzeug mit Crashstruktur mit den Merkmalen des unabhängigen Patentanspruchs demgegenüber den Vorteil, dass nunmehr eine stufenlose Einstellung der Steifigkeit dadurch möglich ist, dass sich wenigstens ein Sperrelement in einer zur Fahrzeuglängsrichtung um ein Winkel verdrehten Ebene bewegt, so dass durch eine durch die

Bewegung erreichte Position des wenigstens einen Sperrelements die Steifigkeit eingestellt wird. Damit können durch lineare oder rotatorische Bewegungen des Sperrelements Einwirkungen auf das Profil vorgenommen werden, um die Steifigkeit zu ändern, beispielsweise indem dadurch der Durchmesser des Profils reduziert wird, indem ein Luftspalt durch die Bewegung des Sperrelements reduziert wird oder erhöht wird. Damit kann die Anpassung der Steifigkeit optimal auf den vorliegenden Crash eingestellt werden. Ein Kompromiss zwischen zwei vorher festgelegten Stufen ist nicht mehr notwendig. Es sind jedoch auch Lösungen möglich, die ohne einen Luftspalt auskommen.

Unter der Crashstruktur ist vorliegend ein Bauelement zu verstehen, das an der Fahrzeugfront zwischen dem Querträger und den jeweiligen Längsträgern eingebaut wird, um bei einem Crash den Längsträger vor Deformation möglichst zu bewahren, um damit die Reparaturkosten zu reduzieren. Die Crashstruktur kann nämlich nach einem Crash ausgetauscht werden, was deutlich günstiger ist als ein Totalschaden bei einer Verformung des Längsträgers. Die Crashstruktur ist vorliegend adaptiv ausgeführt, d.h. mit einer einstellbaren Steifigkeit in Abhängigkeit vom Crashvorgang. Diese Steifigkeit wird für ein Deformationselement, beispielsweise ein Rohr, das mit dem Querträger verbunden ist, eingestellt, und die Deformation dieses Rohres reduziert die Belastung auf die übrige Fahrzeugstruktur bzw. verbraucht Crashenergie. Bei dem Fahrzeug handelt es sich vorliegend um Personenkraftwagen bzw. kleine Lieferwagen. Auch andere Fahrzeugtypen sind jedoch möglich.

Die Crashstruktur wird vorwiegend stufenlos bezüglich ihrer Steifigkeit eingestellt. Stufenlos heißt, dass jeder Steifigkeitswert, der gewünscht ist, eingestellt werden kann. Je nach technischer Ausführung liegt jedoch eine Rasterung üblicherweise vor. Diese Rasterung ist jedoch so klein, dass von einer stufenlosen Einstellung der Steifigkeit gesprochen werden kann.

Bei dem Sperrelement handelt es sich um Schieberringe, die auf das Profil, durch das beispielsweise das Deformationselement getrieben wird, bezüglich seiner Öffnung einwirken. Der Grad der Öffnung bezeichnet die Steifigkeit, dann wird das Deformationselement durch das Profil verjüngt, so gibt der Grad der Verjüngung auch die Steifigkeit an.

Das wenigstens eine Sperrelement wird in einer zur Fahrzeuglängsrichtung um einen Winkel verdrehten Ebene in Bezug zu dem Profil bewegt. Wie aus den abhängigen Ansprüchen hervorgeht, kann dies beispielsweise in einer senkrecht zur Fahrzeuglängsrichtung orientierten Ebene der Fall sein, oder um eine wenige Winkel von der senkrechten verdrehten Ebene. Damit wird dann erreicht, dass durch diese Bewegung, die wie gesagt rotatorisch oder linear sein kann, eine Position erreicht wird, mit der die Steifigkeit eingestellt ist.

Durch die in den abhängigen Ansprüchen aufgeführten Maßnahmen und Weiterbildung sind vorteilhafte Verbesserungen der im unabhängigen Patentanspruch angegebenen Crashstruktur mit der einstellbaren Steifigkeit für ein Deformationselement für ein Fahrzeug möglich.

Wie oben angegeben ist es vorteilhaft einen Winkel von 90° also senkrecht für die Ebene zu nehmen, in der sich das Sperrelement bewegt. Dies ermöglicht eine besonders einfache und unkomplizierte Konstruktion. Die Verzögerung in Zusammenhang mit der Masse / Trägheit in Crashrichtung hat damit einen nur geringen oder sogar gar keinen Einfluss auf die Einstellung der Steifigkeit.

Vorteilhafterweise wird das wenigstens eine Sperrelement von einer gehäusefesten Abstutzung abgestützt. Mit Gehäuse ist vorliegend das Gehäuse der Crashstruktur gemeint. Diese Abstützung bestimmt in ihrer Form, wie sich das wenigstens eine Sperrelement bewegen kann. Das heißt, hier kann auf die Bewegungszeiten, Bewegungsgeschwindigkeiten des wenigstens einen Sperrelements durch das Design der gehäusefesten Abstützung Einfluss genommen werden. Die gehäusefeste Abstützung kann vorteilhafter Weise eben, was besonders einfach herstellbar ist, konkav oder konvex gebildet sein. Die konkav oder konvexe Einstellung hat den Vorteil, dass Stellzeiten reduziert werden, beziehungsweise mit dem Profil ein konstanter Keilwinkel gebildet wird.

Darüber hinaus ist es von Vorteil, dass das Profil aus mehreren Segmenten besteht, wobei zwischen den Segmenten jeweils ein Luftspalt zur Einstellung der Steifigkeit vorgesehen ist. Handelt es sich beispielsweise bei dem Profil um ein Rohr oder ein rohrähnliches Element und dieses ist aus Segmenten zusammengesetzt, zwischen den zumindest teilweise ein Luftspalt besteht, kann dieser Luftspalt benutzt werden, um den Durchmesser und damit die Steifigkeit des Profils festzulegen. Diese Elemente können beispielsweise mit Biegefedern verbunden sein .

Darüber hinaus ist es vorteilhaft, dass die Bewegung des wenigstens einen Sperrelements rotatorisch ist, wobei das wenigstens eine Sperrelement als Exzenter ausgebildet ist. Dies bedeutet, das Sperrelement dreht sich, also führt eine rotatorische Bewegung aus, also es ist als Exzenter ausgebildet und kann daher auf das Profil einen entsprechenden Impuls geben, um beispielsweise einen Luftspalt zu verkürzen oder aufzuweiten.

Eine alternative vorteilhafte Ausführungsform ist, dass das Profil von einer Klammer umgeben ist, die durch einen ersten Antrieb als dem Sperrelement geöffnet beziehungsweise geschlossen wird. Durch einen Antrieb beispielsweise einen Motor beziehungsweise ein Getriebe kann die Klammer entsprechend geöffnet werden, um eine entsprechend geringere Steifigkeit einzustellen, wenn man annimmt, was üblicherweise der Fall ist, dass die Grundeinstellung einer crashaktiven Struktur immer die maximale Steifigkeit sein wird.

In einer weiteren alternativen Ausführungsform kann das Profil von einer flexiblen Struktur als dem Sperrelement umgeben sein, wobei die flexible Struktur durch einen zweiten Antrieb bewegt wird. Dadurch wird eine Art Schlinge um das Profil gelegt, und kann beispielsweise an einem Ende festgelegt sein, und am anderen Ende wird durch einen Antrieb, beispielsweise einen Motor oder ein Getriebe die flexible Struktur gezogen, so dass Luftspalte verengt werden, die sich im Profil befinden und damit eine größere Steifigkeit erzielt wird. In einer anderen Richtung kann vom Motor locker gelassen werden, damit die Luftspalte sich weiter wieder ausbilden Die flexible Struktur kann vorteilhafter Weise ein Band oder ein Seil aus Metall sein oder auch eine kettenartige Struktur sein.

Anstatt von Luftspalten können beispielsweise auch Sollbruchstellen verwendet werden.

Ausführungsbeispiele der Erfindung sind in der Zeichnung dargestellt und werden in der nachfolgenden Beschreibung näher erläutert.

Es zeigen:
Figur 1 ein Blockschaltbild, das den Einbau der Crashstruktur angibt,
Figur 2 a und b Strukturen mit verschiedenen linear beweglichen Sperrelementen,
Figur 3 eine Struktur mit verschiedenen gehäusefesten Abstützungen,
Figur 4 eine erste Ausführungsform mit einem exzentrisch ausgebildeten Sperrelement,
Figur 5 eine zweite Ausführungsform mit einem exzentrisch ausgeführten Sperrelement,
Figur 6 eine Ausführungsform mit sechs exzentrisch ausgebildeten Sperrelementen,
Figur 7 ein Schnitt durch das Sperrelement sowie einen Teil eines Matrixelements und
Figur 8 eine Ausführungsform mit einem Seil, das um ein Verjüngungselement, das aus mehreren Matrixelementen besteht, gewickelt ist.

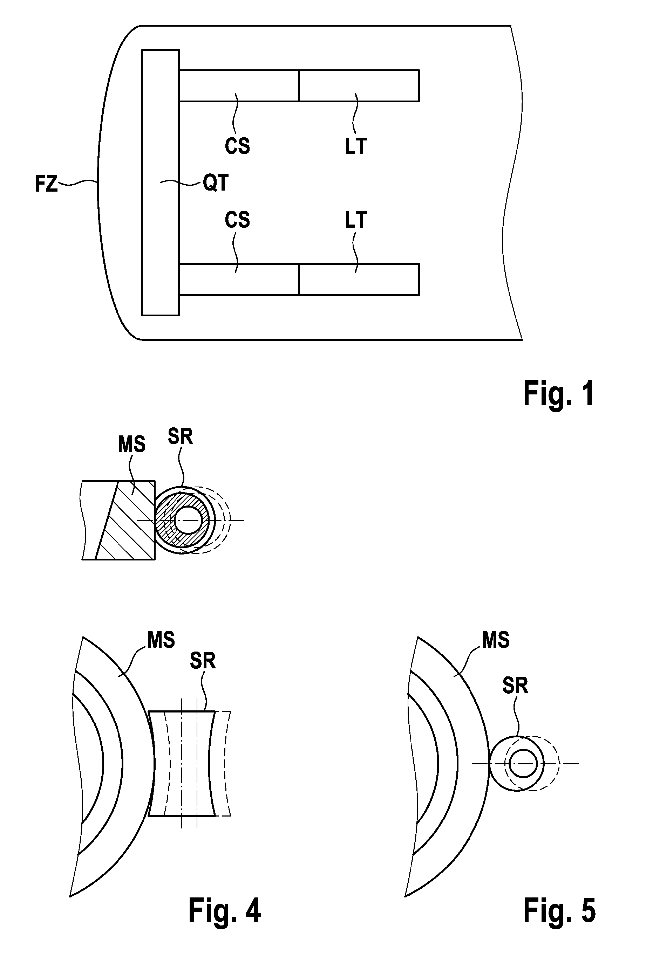

Figur 1 zeigt schematisch, wo die Crashstruktur CS im Fahrzeug FZ eingesetzt wird. Crashstruktur CS befindet sich jeweils zwischen einem Querträger QT und den jeweiligen Längsträgern LT. Wie oben angegeben, ist die Funktion der Crashstruktur CS den Längsträger LT möglichst vor vielen Crashs zu schützen, um eine Deformation dieser Längsträger LT zu vermeiden und so einen Totalschaden des Fahrzeugs FZ zu verhindern. Erfindungsgemäß weisen die Crashstrukturen eine stufenlos einstellbare Steifigkeit auf.

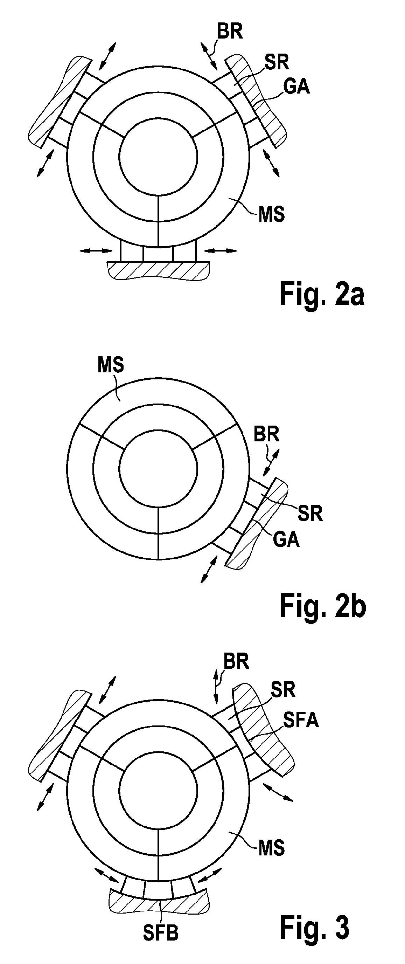

Fig. 2 zeigt eine stufenlose Verstellmöglichkeit einer erfindungsgemäßen adaptiven Crashstruktur durch ein Verschieben von Sperrelementen SR in zur Crashrichtung annähernden senkrechten Richtungen BR. Die Sperrelemente SR sind durch gehäusefeste Abstützungen GA abgestutzt, so dass ihre Bewegungsrichtung vorgegeben ist. Die Sperrelemente SR können beispielsweise durch Elektromotoren oder andere Antriebe bewegt werden. Vorliegend bewegen sich in Figur 2a die Sperrelemente SR nach außen, um eine geringere Steifigkeit des Verjüngungselements mit den Matrizensegmenten MS zu bewirken, denn das Deformationselement wird beim Durchdringen des Verjüngungselements durch die Öffnung die Matrizensegmente MS bis an die Sperrelemente SR drücken und so eine Aufweitung bewirken und somit eine geringere Steifigkeit erzielen. Die Matrizensegmente MS können Sollbruchstellen aufweisen, die durch die Striche, die radial in den Matrizensegmenten MS zu erkennen sind, angedeutet sind.

In Figur 2b dargestellt, können die Sperrelemente SR in verschiedenen Winkeln gegenüber möglichen Sollbruchstellen oder anderen Unterteilungen der Matrixsegmente MS angeordnet sein. Vorliegend werden jeweils zwei Sperrelemente SR gegensinnig gegen sich auf einer Abstützung GA bewegt. Die Abstützung GA ist dabei derart geformt, dass den Matrizensegmenten MS in einer Richtung der Abstützung GA mehr Raum zum Ausrücken gegeben wird. Die Abstützung GA muss dabei nicht eben sein.

Figur 3 zeigt, dass es auch andere Abstützelemente gibt, nämlich neben der ebenen Abstützung ES auch eine Abstützfläche SFA, die mit der Matrize einen aufgehenden Keilwinkel bildet, um Stellzeiten zu reduzieren. Die Abstützfläche SFB bildet mit der Matrize einen konstanten Keilwinkel für den Sperrelementespalt.

Figur 4 und 5 zeigen jeweils Ausführungsformen der Matrizensegmente einer adaptiven Crashstruktur nach dem Prinzip der Verjüngung über einen Exzenter. Die Drehachse der Exzenter SR kann windschief, wie in Figur 4 oder auch achsparallel zur Matrizenachse verlaufen, wie es Figur 5 zeigt. Die Drehachse des Exzenters ist dabei gehäusefest. Figur 4 zeigt oben einen Schnitt, der unten dargestellten Draufsicht.

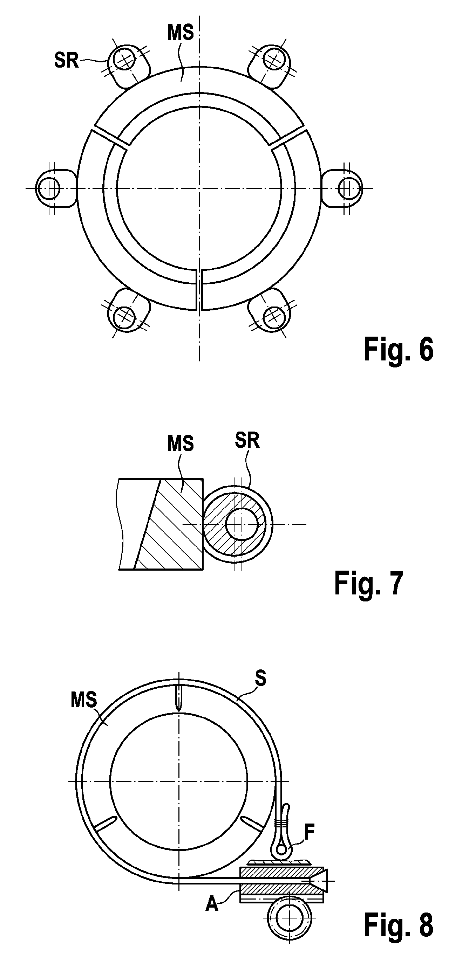

In Figur 6 dargestellt, können die Exzenter SR auch so gestaltet werden, dass bei steifster Einstellung eine Art Raster entsteht, so dass die Exzenter SR beim Crash nicht ungewollt ausweichen können. Figur 7 zeigt dies im Schnitt.

Eine weitere in der Zeichnung nicht dargestellte Ausführungsform ist das nach dem Rohrschellenprinzip, bei dem beispielsweise eine zweiteilige Matrize gegenüberliegenden Seiten geteilt ist. Auf eine der beiden Seiten sind die Matrizensegmente durch ein Gelenk miteinander verbunden und auf der anderen Seite hält ein Bolzen die beiden Segmente zusammen, der bei Bedarf verschoben wird, um die Matrize mit in die Rohrschelle zu öffnen. Es kann aber auch statt dem Bolzen ein Aktuator beziehungsweise Getriebe beispielsweise ein Ritzelzahnstangengetriebe verwendet werden, mit dem die Aufweitung der Matrize (Rohrschelle) stufenlos eingestellt werden kann.

Figur 8 zeigt eine weitere Variante, bei der das Prinzip zum Schlingbandprinzip aufgeweitet wurde. Ein Band oder Seil S beziehungsweise auch ein Flachseil umschlingt die Segmente MS. Zur Einstellung einer bestimmten Matrizenöffnung wird dem Band, Seil oder Schlagseil S durch ein Getriebe oder eine Aktuatorik A entsprechend Raum gegeben, so dass die Matrizen MS erst nach dem vorher festgesetzten Aufweiten vom Band S festgehalten werden. Die Matrizenöffnung kann prinzipiell auch nach einem Aufweiten verringert werden. Anstatt eines Bandes beziehungsweise eines Seiles kann auch eine Kette oder eine kettenähnliche Baugruppe beispielsweise über Gelenke verbundene Stützteile verwendet werden.

Die vorliegende Erfindung kann neben dem Verjüngungsprinzip auch an anderen Wirkprinzipien der Umformung wie z.B. Abschaben, Aufweiten, Längung usw. angepasst werden.

## Patentansprüche

1. Fahrzeug (FZ) mit Crashstruktur (CS) mit einstellbarer Steifigkeit für ein Deformationselement für das Fahrzeug (FZ), wobei das Fahrzeug (FZ) eine Front, einen Querträger (QT) und einen Längsträger (LT) aufweist, wobei die Crashstruktur (CS) in der Front zwischen dem Querträger (QT) und dem Längsträger (LT) angeordnet ist, wobei die Crashstruktur (CS) eine stufenlos einstellbare Steifigkeit aufweist, wobei die Crashstruktur (CS) ein Profil und wenigstens ein Sperrelement (SR) aufweist, wobei das Zusammenwirken des Profils mit dem Speerelement (SR) die Steifigkeit bestimmt, wobei sich das wenigstens ein Sperrelement (SR) in einer zur Fahrzeuglängsrichtung um einen Winkel verdrehten Ebene bewegt, wobei die durch die Bewegung erreichte Position des wenigstens einen Sperrelements (SR) die Steifigkeit einstellt,
**dadurch gekennzeichnet, dass**
das Profil aus mehreren Segmenten (MS) besteht, wobei zwischen den Segmenten (MS) jeweils ein Luftspalt zur stufenlosen Einstellung der Steifigkeit vorgesehen ist.

2. Fahrzeug mit Crashstruktur nach Anspruch 1,
**dadurch gekennzeichnet,**
**dass** der Winkel 90° ist.

3. Fahrzeug mit Crashstruktur nach Anspruch 1 oder 2,
**dadurch gekennzeichnet, dass**
das wenigstens eine Sperrelement (SR) von einer gehäusefesten Abstützung (GA) abgestützt ist.

4. Fahrzeug mit Crashstruktur nach Anspruch 3,
**dadurch gekennzeichnet, dass**
die gehäusefeste Abstützung (GA) eben, konkav oder konvex ist.

5. Fahrzeug mit Crashstruktur nach einem der vorhergehenden Ansprüche,
**dadurch gekennzeichnet, dass**
die Bewegung des wenigstens einen Sperrelements (SR) rotatorisch ist, wobei das wenigstens eine Sperrelement (SR) als Exzenter ausgebildet ist.

6. Fahrzeug mit Crashstruktur nach Anspruch 1,
**dadurch gekennzeichnet, dass**
das Profil von einer Klammer umgeben ist, die durch einen ersten Antrieb als dem Sperrelement geöffnet wird.

7. Fahrzeug mit Crashstruktur nach Anspruch 1,
**dadurch gekennzeichnet, dass**
das Profil (MS) von einer flexiblen Struktur als dem wenigstens einen Sperrelement (SR) umgeben ist, wobei die flexible Struktur (S) durch einen zweiten Antrieb bewegt wird.

8. Fahrzeug mit Crashstruktur nach Anspruch 7,
**dadurch gekennzeichnet, dass**
die flexible Struktur ein Band oder ein Seil (S) ist.

9. Fahrzeug mit Crashstruktur nach Anspruch 7,
**dadurch gekennzeichnet, dass**
die flexible Struktur (S) kettenartig ausgebildet ist.

## Claims

1. Vehicle (FZ) having a crash structure (CS) having adjustable rigidity for a deformation element for the vehicle (FZ), the vehicle (FZ) having a front, a crossmember (QT) and a longitudinal member (LT), the crash structure (CS) being arranged in the front between the crossmember (QT) and the longitudinal member (LT), the crash structure (CS) having an infinitely variably adjustable rigidity, the crash structure (CS) having a profile and at least one locking element (SR), the interaction of the profile with the locking element (SR) defining the rigidity, the at least one locking element (SR) moving in a plane which is rotated by an angle with respect to the vehicle longitudinal direction, the position, achieved by way of the movement, of the at least one locking element (SR) setting the rigidity, **characterized in that** the profile comprises a plurality of segments (MS), wherein an air gap for stepless adjustment of the rigidity is provided between the segments (MS).

2. Vehicle having a crash structure according to Claim 1, **characterized in that** the angle is 90°.

3. Vehicle having a crash structure according to Claim 1 or 2, **characterized in that** the at least one locking element (SR) is supported by a support (GA) which is fixed to a housing.

4. Vehicle having a crash structure according to Claim 3, **characterized in that** the support (GA) which is fixed to a housing is planar, concave or convex.

5. Vehicle having a crash structure according to any one of the preceding claims, **characterized in that** the movement of the at least one locking element (SR) is rotational, wherein the at least one locking element (SR) is constructed as a cam.

6. Vehicle having a crash structure according to Claim 1, **characterized in that** the profile is surrounded by a clamp, which is opened by a first drive as the locking element.

7. Vehicle having a crash structure according to Claim 1, **characterized in that** the profile (MS) is surrounded by a flexible structure as the at least one locking element (SR), wherein the flexible structure (S) is moved by a second drive.

8. Vehicle having a crash structure according to Claim 7, **characterized in that** the flexible structure is a band or a cable (S).

9. Vehicle having a crash structure according to Claim 7, **characterized in that** the flexible structure (S) is constructed in a chain-like manner.

## Revendications

1. Véhicule (FZ) comprenant une structure d'absorption de choc (CS) de rigidité ajustable pour un élément de déformation du véhicule (FZ), le véhicule (FZ) présentant une partie avant, une traverse (QT) et un support longitudinal (LT), la structure d'absorption de choc (CS) étant disposée dans la partie avant entre la traverse (QT) et le support longitudinal (LT), la structure d'absorption de choc (CS) présentant une rigidité pouvant être ajustée de façon continue, la structure d'absorption de choc (CS) présentant un profil et au moins un élément d'arrêt (SR), la coopération du profil avec l'élément d'arrêt (SR) déterminant la rigidité, l'au moins un élément d'arrêt (SR) se déplaçant dans un plan tourné d'un certain angle par rapport à la direction longitudinale du véhicule, la position de l'au moins un élément d'arrêt (SR), obtenue par ce mouvement, ajustant la rigidité,
**caractérisé en ce que**
le profil se compose de plusieurs segments (MS), un entrefer pour l'ajustement continu de la rigidité étant à chaque fois prévu entre les segments (MS).

2. Véhicule comprenant une structure d'absorption de choc selon la revendication 1,
**caractérisé en ce que**
l'angle mesure 90°.

3. Véhicule comprenant une structure d'absorption de choc selon la revendication 1 ou 2,
**caractérisé en ce que**
l'au moins un élément d'arrêt (SR) est supporté par un support (GA) fixé au boîtier.

4. Véhicule comprenant une structure d'absorption de choc selon la revendication 3,
**caractérisé en ce que**
le support (GA) fixé au boîtier est plan, concave ou convexe.

5. Véhicule comprenant une structure d'absorption de choc selon l'une quelconque des revendications précédentes,
**caractérisé en ce que**
le mouvement de l'au moins un élément d'arrêt (SR) est un mouvement de rotation, l'au moins un élément d'arrêt (SR) étant réalisé sous forme d'excentrique.

6. Véhicule comprenant une structure d'absorption de choc selon la revendication 1,
**caractérisé en ce que**
le profil est entouré par une pince qui est ouverte par un premier entraînement en tant qu'élément d'arrêt.

7. Véhicule comprenant une structure d'absorption de choc selon la revendication 1,
**caractérisé en ce que**
le profil (MS) est entouré par une structure flexible en tant qu'au moins un élément d'arrêt (SR), la structure flexible (S) étant déplacée par un deuxième entraînement.

8. Véhicule comprenant une structure d'absorption de choc selon la revendication 7,
**caractérisé en ce que**
la structure flexible est une bande ou un câble (S).

9. Véhicule comprenant une structure d'absorption de choc selon la revendication 7,
**caractérisé en ce que**
la structure flexible (S) est réalisée en forme de chaîne.
